# EUROPEAN PATENT SPECIFICATION

(11) **EP 0 349 929 B1**
(45) Date of publication and mention of the grant of the patent: **05.10.1994**
(21) Application number: 89112003.2
(22) Date of filing: 30.06.1989
(51) Int. Cl.: H02H 3/04

(54) **Switch with pre-alarm means**
Schalter mit Voralarm
Interrupteur avec alarme préliminaire

(30) Priority: 05.07.1988 JP 165815/88
(43) Date of publication of application: 10.01.1990
(73) Proprietor: MITSUBISHI DENKI KABUSHIKI KAISHA, Tokyo 100 (JP)
(72) Inventor: Ishii, Kazuhiro c/ Fukuyama Seisakusho, 1-8, Midorimachi Fukuyama-shi, 720 (JP); Kimura, Kenzi c/ Fukuyama Seisakusho, 1-8, Midorimachi Fukuyama-shi, 720 (JP)
(74) Representative: KUHNEN, WACKER & PARTNER

(56) References cited:
- DE-A- 3 501 353
- FR-A- 2 497 013
- FR-A- 2 564 648

## Description

The present invention relates to a switch with pre-alarm means for alarming that an abnormal current flows on a breaker of the switch previous to tripping operation of the breaker, and especially relates to a switch with pre-alarm means having self-holding function for alarming that an abnormal current flew even when the current has dropped back to a normal value.

Conventionally, a switch with pre-alarm means having an operation indicator and pre-alarm apparatus is known in the art. The operation indicator is, for example, a light emitting diode (LED) or a buzzer and is provided on an outer face of a housing of the switch.

When an accident happens on the load, an abnormal overcurrent flows on the breaker of the switch. The pre-alarm apparatus detects the over current. When the level of the over current is above a predetermined alarming level, the pre-alarm apparatus outputs a signal for lighting the LED or for driving the buzzer. Thereby, the user or operator can note the occurrence of the over current.

After lapse of a predetermined time period after occurrence of the continuing overcurrent, the breaker of the switch is tripped and the overcurrent is cut off.

However, when the level of the abnormal overcurrent once decreases below the predetermined alarming level, the LED is switched off and the operator or user can no longer confirm the occurrence of the over current. Therefore, the conventional switch with pre-alarm means has the disadvantage that the operation indicator must be monitored all times.

FR-A-2 564 648 discloses a switch according to the preamble of claim 1. In detail, FR-A-2 564 648 describes a circuit breaker being equipped with a monitoring circuit. The monitoring circuit is responsive to the detection of a current flow on the power lines exceeding the rated current value. In case of such an over-current, a Zener diode becomes conductive and triggers a thyristor which, as a consequence, activates an alarming means.

FR-A-2 497 013 discloses a circuit breaker having a comparator for comparing a value dependent on the actual current flow with a predetermined value and generating an alarming signal in case of over-current. Furthermore, a tripping circuit is provided for interrupting the current flow in case of a critical overcurrent condition.

An object of the present invention is to provide an improved switch with pre-alarm means having self-holding function for indicating the occurrence of over current without the need of continuous monitoring and in which the reference value of the pre-alarm means can be easily adjusted with respect to the rated current value of a breaker of the switch.

The present invention provides a switch with pre-alarm means in accordance with claim 1.

The switch with pre-alarm means in accordance with the present invention is constructed as mentioned above. When the value of the current flowing through the load is above the predetermined reference level, the pre-alarm judging means is switched on and the self-holding means holds the output thereof at a predetermined level. Therefore, the alarming means, for example, an LED or a buzzer continues to alarm the occurrence of the abnormal overcurrent even when the value of the current has decreased below the predetermined reference level. Thereby, the operator or user can recognize that the value of the current at least once has been above the predetermined alarming level.

FIG.1 is a perspective view showing a preferred embodiment of a switch with pre-alarm means in accordance with the present invention.

FIG.2 is a drawing showing time-current characteristics of pre-alarm and over-current tripping operations of the switch with pre-alarm means in accordance with the present invention.

FIG.3 is a circuit diagram of the switch with pre-alarm means in accordance with the present invention.

FIG.4 is a circuit diagram showing details of the pre-alarm circuit 20 shown in FIG.3.

FIG.5 is a circuit diagram showing details of a pre-alarm output circuit 21 shown in FIG.3.

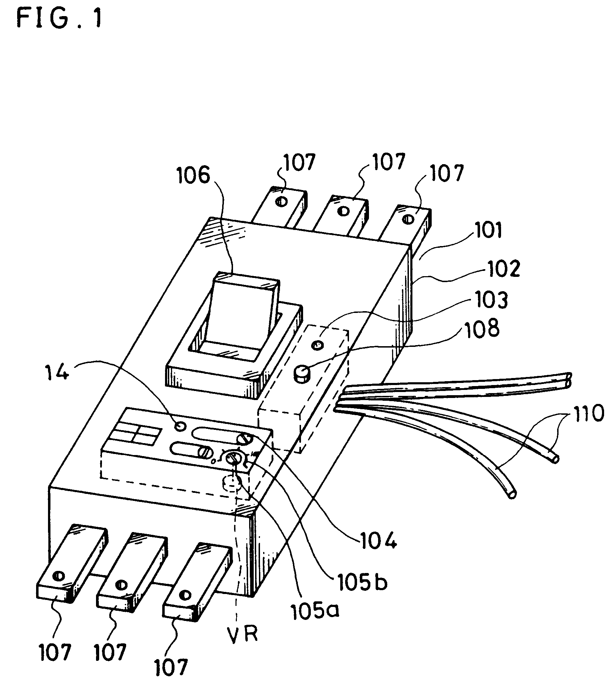

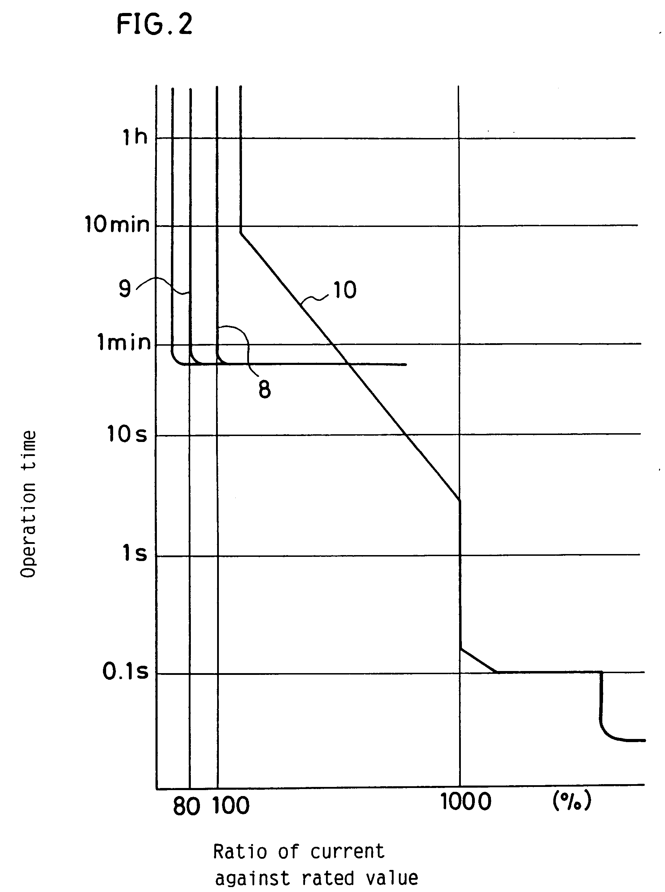

A preferred embodiment of a switch with pre-alarm means in accordance with the present invention is described referring to FIGs.1, 2, 3, 4 and 5.

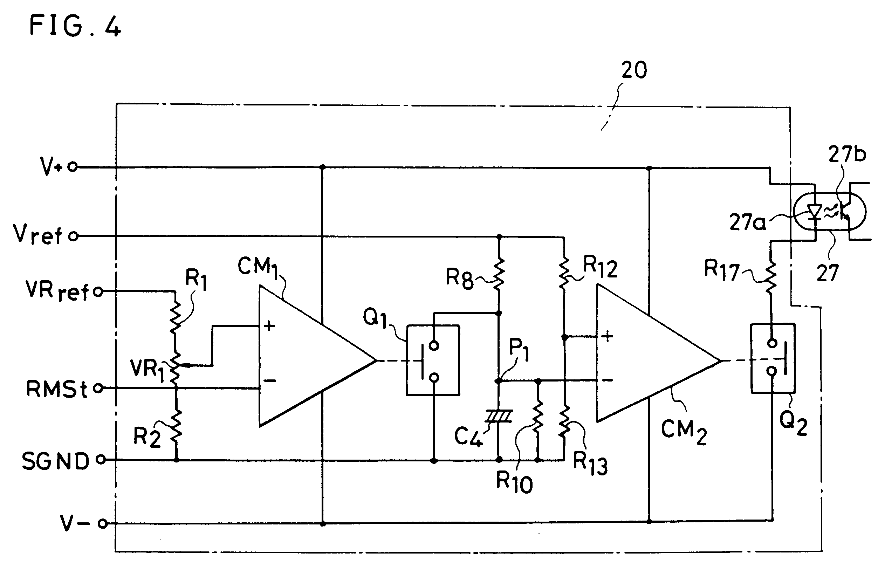

FIG.1 is a perspective view showing a switch with pre-alarm means in accordance with the present invention. In FIG.1, the switch 101 comprises a breaker and a pre-alarm apparatus in a housing 102. An operation indicator 103 which is, for example, a light emitting diode (LED) is provided on the outer face of the housing 102 so that an operator can easily monitor the operation indicator 103. A reset switch 108 is also provided on the outer face of the housing 102. A lug 104 is for changing the rated value of current of the switch 101, and a lug 105a is for adjusting the level of the pre-alarm of the switch. The lug 105a is rotatable and co-axially connected to a variable resistor such as VR₁ shown in FIG. 4 so that the level of the pre-alarm for lighting the operation indicator 103 can be continuously adjusted in a predetermined range for example 70--100% of the rated value of the current of the switch 101. A level indicator 105b such as a scale for current (A) is provided around the lug 105a, whereby the level of the pre-alarm can be recognized.

Furthermore, numeral 106 designates an operation lever of the breaker installed in the housing 102 for making and breaking contacts thereof; and numerals 107, 107... designate terminals of the switch 101 to be connected to electric power lines and loads. Numeral 110 designates cables to be connected to a remote apparatus, for example, a centralized control apparatus.

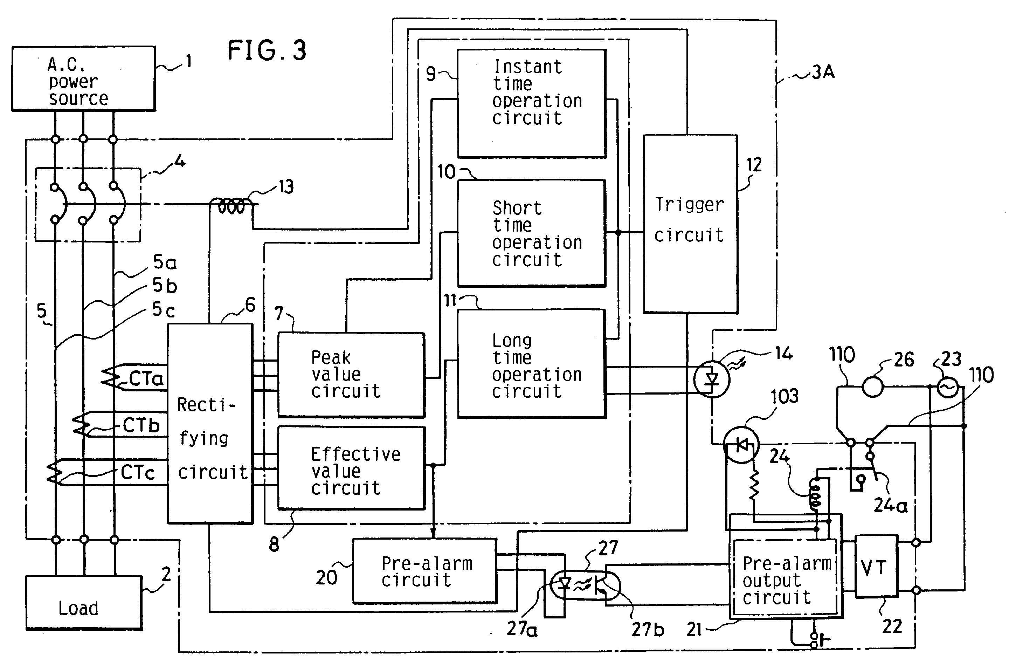

FIG.3 is a circuit diagram of the switch with pre-alarm means in accordance with the present invention. In FIG.3, current transformers CTa, CTb and CTc are disposed on three phases of A.C. power lines 5a, 5b and 5c, respectively. Output of secondary windings of the current transformers CTa, CTb and CTc are inputted to a rectifying circuit 6. Outputs of the rectifying circuit 6 are inputted to a peak value circuit 7 and an effective value circuit 8. The peak value circuit 7 selects an output from the rectifying circuit 6 corresponding to an output of the current transformers CTa, CTb and CTc including the maximum value and converts the output to a peak value. The effective value circuit 8 also selects an output from the rectifying circuit 6 including the maximum value and converts the output to an effective value. Output of the peak value circuit 7 is inputted to an instant time operation circuit 9 and a short time operation circuit 10. Output of the effective value circuit 8 is inputted to a long time operation circuit 11 and a pre-alarm circuit 20.

The instant time operation circuit 9, the short time operation circuit 10 and the long time operation circuit 11 are connected to a trigger circuit 12, respectively. The trigger circuit 12 is connected to a tripping coil 13 and the rectifying circuit 6. The other terminal of the tripping coil 13 is also connected to the rectifying circuit 6. A light emitting diode (LED) 14 for indicating occurrence of over-current is connected to the long time operation circuit 11. The pre-alarm circuit 20 is connected to a pre-alarm output circuit 21 via photo-coupler 27. A light emitting diode (LED) 103 for pre-alarming and a relay coil 24 for pre-alarming are connected to the pre-alarm output circuit 21. An electric power source 23 for controlling the switch 101 is connected to the pre-alarm output circuit 21 via a voltage dropping element 22 such as a voltage transformer (VT). An alarm buzzer 26 is connected to the power source 23 via switch 24a. The switch 24a is opened and closed by operation of the relay coil 24 for pre-alarming whereby the alarm buzzer 26 is controlled.

FIG.4 is a circuit diagram showing details of the pre-alarm circuit 20 in FIG. 3. In FIG. 4, terminals designated by V+,V- and SGND are respectively connected to an electric power source of an over-current tripping circuit which is not shown in the drawings. V_{ref} is a reference voltage, which is kept, for example, at 4V. Voltage at a terminal designated by VR_{ref} is changeable due to the rated value of the current and set at, for example, 4V when the rated value is 400A and set at 2V when the rated value is 200A. A non-inverted terminal of a first comparator CM₁ is connected to a variable resistor VR₁ and voltage thereof is changed by the setting of the variable resistor VR₁. The variable resistor VR₁ is used for setting the pre-alarm level of the value of the current, and is co-axially provided on the lug 105a shown in FIG.1.

A D.C. signal which is in proportion to the effective value of the current flowing on a main circuit, for example, electric power line 5a, 5b or 5c is applied to a terminal designated by RMST. Namely, signal on the terminal designated by RMST is the output of the effective value circuit 8. When the level of the D.C. signal at the terminal of RMST is above the reference voltage V_{ref} of the first comparator CM₁, a switch Q₁ is turned off from its on state. A non-inverted terminal of a second comparator CM₂ is inputted to a reference voltage divided by resistors R₁₂ and R₁₃. An inverted terminal of the second comparator CM₂ is connected to a point P₁ which is a connecting point of resistors R₈ and R₁₀ connected between V_{ref} and SGND in series. A capacitor C₄ is connected to the resistor R₁₀ in parallel.

At first, as the switch Q₁ is turned to on state, input of the inverted terminal of the second comparator CM₂ is "O". When the switch Q₁ turns off, the resistor R₈ and the capacitor C₄ start to effect a timing operation and the voltage of the capacitor C₄ is gradually raised. When the voltage of the capacitor C₄ reaches the reference voltage of the second comparator CM₂, a switch Q₂ connected to the second comparator CM₂ turns on and a current begins to flow through the photo-coupler 27 via resistor R₁₇. As a result, a signal is output to the pre-alarm output circuit 21.

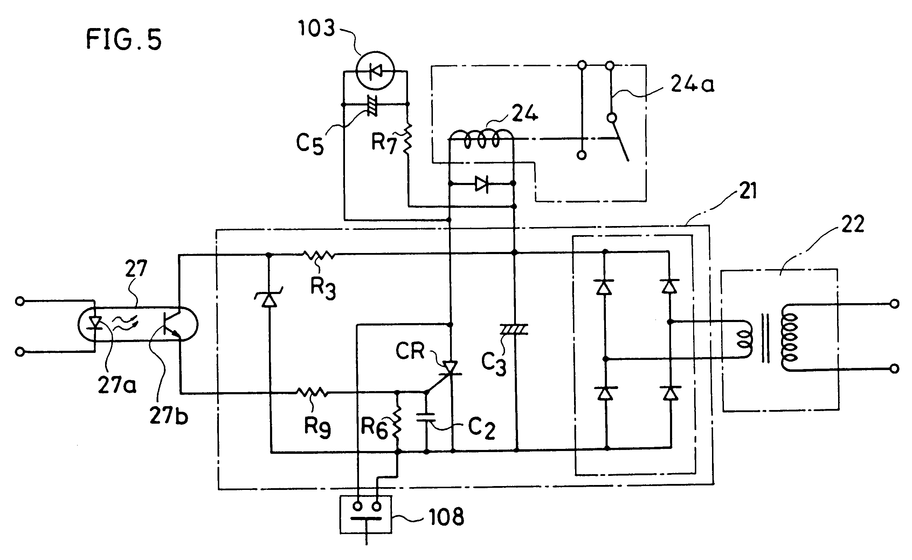

FIG.5 is a circuit diagram showing details of the pre-alarm output circuit 21. In FIG.5, when LED 27a is lighted by an output signal from the pre-alarm circuit 20, photo-transistor 27b of the photo-coupler 27 turns on. When the photo-transistor 27b turns on, current flows to gate of thyristor CR via resistor R₃, transistor 27b and resistor R₉. When the thyristor CR turns on, current flows through the relay coil 24 and switch 24a is turned on by electro-magnetic force of the relay coil 24. Since the alarm buzzer 26 is connected in series to the switch 24a as shown in FIG.3, when the normal open switch 24a is turned on the alarm buzzer 26 is driven. At the same time, the operation indicator (LED) 103 for pre-alarming is lighted. A smoothing capacitor C₃ of FIG.5 is for smoothing full-wave rectified current and a capacitor C₅ is for preventing erroneous lighting of the operation indicator (LED) 103 due to large overcurrent of the main circuit. When the thyristor CR is once turned on, it is never turned off unless being reset by the reset switch 108 or shutting off of the power source 23. Therefore, the thyristor CR has a self-holding function.

In the above-mentioned embodiment, the output of the pre-alarm output circuit for lighting the operation indicator (LED) 103 can be output from the housing 102 of the switch 101 via the cable 110 (FIG.1). Such cables 110 are used in parallel for connecting the plural switches to the centralized control apparatus (not shown in the drawings) which is disposed at a remote centralized control room. Thereby, an operator or user can recognize that at least an overcurrent flows through the load on which the switch with pre-alarm means in accordance with the present invention is provided by alarming of the buzzer. After that, he operates or inspects the switches 101... and confirms the one lighting the operation indicator (LED) 103 by self-holding function thereof.

In the above-mentioned embodiment, the cables 110 are directly led out from the housing 102. However, it is possible to provide output terminals on the outer face of the housing and to connect other cables between the output terminals and the centralized control apparatus. As a operation indicator 103, the LED is used. However, another indicating device can replace the LED.

## Claims

1. A switch with pre-alarm means comprising:
at least one current value measuring means (CTa, CTb, CTc, 6, 8) for measuring the value of at least one current flowing in a load and for outputting a first signal (RMSt) corresponding to the maximal value of the current;
a breaker (11 - 13) for tripping contacts (4) when said first signal (RMSt) exceeds a rated current value;
pre-alarm judging means (20) for comparing said first signal (RMSt) from said current value measuring means (CTa, CTb, CTc, 6, 8) with a reference value and for outputting a second signal when said first signal (RMSt) is above said refence value;
self holding means (21) for providing an output signal at a predetermined level when said second signal is once output from said pre-alarm judging means (20) and for holding said output signal at said predetermined level even when no second signal is output after that; and
alarming means (103, 26) for providing an alarm upon receiving said output signal from the self-holding means (21),
characterized in that
said pre-alarm judging means (20) comprises manually adjustable means (VR₁) for deriving said reference value from a voltage (VR_{ref}) dependent on the rated current value, a first comparator (CM₁) for comparing the first signal (RMSt) with the reference value, a switch (Q₁) controlled by said first comparator (CM₁) and a second comparator (CM₂) connected to said switch (Q₁) for providing said second signal with a time delay after said first comparator (CM₁) detects that the first signal (RMSt) exceeds the reference value.

2. A switch according to claim 1, further comprising connecting means (110) to be connected to a centralized control apparatus disposed at position remote from said switch for outputting said output of said self-holding means (21).

3. A switch according to claim 2, wherein said centralized control apparatus has at least one alarming means which is driven by said output signal of said self-holding means (21) held at said predetermined level received via said second connecting means (110).

4. A switch according to claim 1, 2 or 3, wherein said self-holding means (21) comprises a thyristor (CR).

5. A switch according to claim 4, comprising a reset switch (108) which is connected in parallel to the thyristor (CR) of said self-holding means (21).

## Patentansprüche

1. Schalter mit Vorwarneinrichtung, mit:
zumindest einer Stromwert-Meßeinrichtung (CTa, CTb, CTc, 6, 8) zum Messen des Werts zumindest eines Stroms, der in einer Last fließt, und zum Abgeben eines ersten Signals (RMSt), das dem maximalen Wert des Stroms entspricht;
einem Unterbrecher (11 bis 13) zum Auslösen bzw. Trennen von Kontakten (4), wenn das erste Signal (RMSt) einen Nennwert-Stromwert überschreitet;
einer Vorwarn-Beurteilungseinrichtung (20) zum Vergleichen des ersten Signals (RMSt) von der Stromwert-Meßeinrichtung (CTa, CTb, CTc, 6, 8) mit einem Referenzwert und zum Abgeben eines zweiten Signals, wenn das erste Signal (RMSt) oberhalb des Referenzwerts liegt;
einer Selbsthalteeinrichtung (21) zum Bereitstellen eines Ausgangssignals mit einem vorbestimmten Pegel, wenn das zweite Signal einmal von der Vorwarn-Beurteilungseinrichtung (20) abgegeben wurde, und zum Festhalten des Ausgangssignals bei dem vorbestimmten Pegel, selbst wenn danach kein zweites Signal abgegeben wird; und
einer Alarmeinrichtung (103, 26) zum Erzeugen eines Alarms bei Empfangen des Ausgangssignals von der Selbsthalteeinrichtung (21),
dadurch gekennzeichnet, daß
die Vorwarn-Beurteilungseinrichtung (20) eine manuell einstellbare Einrichtung (VR₁) zum Gewinnen des Bezugswerts aus einer Spannnung (VR_{ref}), die von dem Nennstromwert abhängt, einen ersten Vergleicher (CM₁) zum Vergleichen des ersten Signals (RMSt) mit dem Referenzwert, einen Schalter (Q₁), der durch den ersten Vergleicher (CM₁) gesteuert wird, und einen zweiten Vergleicher (CM₂) aufweist, der mit dem Schalter (Q₁) zum Bereitstellen des zweiten Signals mit einer Zeitverzögerung nach der durch den ersten Vergleicher (CM₁) erfolgenden Erfassung, daß das erste Signal (RMSt) den Referenzwert überschreitet, verbunden ist.

2. Schalter nach Anspruch 1, der weiterhin eine Verbindungseinrichtung (110) für die Verbindung mit einem zentralisierten, an einer von dem Schalter entfernten Position angeordneten Steuergerät aufweist, das für die Abgabe des Ausgangssignals der Selbsthalteeinrichtung (21) aufweist.

3. Schalter nach Anspruch 2, bei dem das zentralisierte Steuergerät zumindest eine Alarmeinrichtung besitzt, die durch das über die zweite Verbindungseinrichtung (110) empfangene, bei dem vorbestimmten Pegel gehaltene Ausgangssignal der Selbsthalteeinrichtung (21) angesteuert wird.

4. Schalter nach Anspruch 1, 2 oder 3, bei dem die Selbsthalteeinrichtung (21) einen Thyristor (CR) aufweist.

5. Schalter nach Anspruch 4, mit einem Rücksetzschalter (108), der parallel zu dem Thyristor (CR) der Selbsthalteeinrichtung (21) geschaltet ist.

## Revendications

1. Interrupteur à moyen d'alarme préliminaire comprenant :
au moins un moyen de mesure de valeur de courant (CTa, CTb, CTc, 6, 8) pour mesurer la valeur d'au moins un courant circulant dans une charge et pour produire un premier signal (RMSt) correspondant la valeur maximale du courant ;
un disjoncteur (11 - 13) pour disjoncter des contacts (4) lorsque le premier signal (RMSt) dépasse une valeur de courant nominale ;
un moyen de jugement d'alarme préliminaire (20) pour comparer le premier signal (RMSt) du moyen de mesure de valeur de courant (CTa, CTb, CTc, 6, 8) à une valeur de référence et pour produire un second signal lorsque le premier signal (RMSt) est au-dessus de la valeur de référence ;
un moyen d'auto-maintien (21) pour produire un signal de sortie à un niveau prédéterminé lorsque le second signal est une fois produit du moyen de jugement d'alarme préliminaire (20) et pour maintenir le signal de sortie audit niveau prédéterminé même lorsqu'aucun second signal n'est produit après celui-ci ;
un moyen d'alarme (103, 26) pour produire une alarme lors de la réception du signal de sortie du moyen d'auto-maintien (21),
caractérisé ce que
le moyen de jugement d'alarme préliminaire (20) comprend un moyen réglable manuellement (VR₁) pour dériver la valeur de référence d'une tension (VR_{ref}) dépendant de la valeur nominale de courant, un premier comparateur (CM₁) pour comparer le premier signal (RMSt) à la valeur de référence, un commutateur (Q₁) commandé par le premier comparateur (CM₁) et un second comparateur (CM₂) relié audit commutateur (Q₁) pour produire le second signal à un retard de temps après que le premier comparateur (CM₁) détecte que le premier signal (RMSt) dépasse la valeur de référence.

2. Interrupteur selon la revendication 1, comprenant de plus un moyen de connexion (110) à relier à un dispositif de commande centralisé disposé à un emplacement éloigné de l'interrupteur pour produire la sortie précitée du moyen d'auto-maintien précité (21).

3. Interrupteur selon la revendication 2, dans lequel le dispositif de contrôle centralisé a au moins un moyen d'alarme qui est attaqué par le signal de sortie précité du moyen d'auto-maintien précité (21) maintenu au niveau prédéterminé précité reçu via le second moyen de connexion précité (110).

4. Interrupteur selon la revendication 1, 2 ou 3, dans lequel le moyen d'auto-maintien précité (21) comprend un thyristor (CR).

5. Interrupteur selon la revendication 4, comprenant un commutateur de réinitialisation (108) qui est relié en parallèle au thyristor (CR) du moyen d'auto-maintien précité (21).
